# EUROPÄISCHE PATENTSCHRIFT

(11) **EP 1 893 434 B1**
(45) Veröffentlichungstag und Bekanntmachung des Hinweises auf die Patenterteilung: **27.05.2015**
(21) Anmeldenummer: 06753257.2
(22) Anmeldetag: 08.06.2006
(51) Int. Cl.: B60J 7/20

(54) **CABRIOLET-FAHRZEUG MIT EINEM IN EINEM VERDECKKASTEN ABLEGBAREN DACH**
CONVERTIBLE WITH A ROOF WHICH CAN BE STORED IN A FOLDING-TOP COMPARTMENT
CABRIOLET DONT LE TOIT PEUT SE RANGER DANS UN COFFRE DE CAPOTE

(30) Priorität: 09.06.2005 DE 102005026489
(43) Veröffentlichungstag der Anmeldung: 05.03.2008
(73) Patentinhaber: Valmet Automotive Oy, 23500 Uusikaupunki (FI)
(72) Erfinder: WEISSMÜLLER, Olaf, 49565 Bramsche (DE); HESELHAUS, Udo, 49479 Ibbenbüren (DE)
(74) Vertreter: Kronthaler, Schmidt & Coll.
(86) Internationale Anmeldenummer: PCT/DE2006/000984
(87) Internationale Veröffentlichungsnummer: WO 2006/131101

(56) Entgegenhaltungen:
- EP-A- 1 609 652
- WO-A-2005/102756
- DE-A1- 10 162 303
- DE-A1- 10 339 274
- US-A1- 2003 189 355

## Beschreibung

Die Erfindung betrifft ein Cabriolet-Fahrzeug mit einem im rückwärtigen Fahrzeugbereich in einem Verdeckkasten ablegbaren Dach nach dem Oberbegriff des Anspruchs 1.

Es ist bekannt, den Verdeckkasten größenvariabel auszubilden, so daß er zur Aufnahme des Daches eine maximale Größe erreicht und bei geschlossenem Dach zugunsten eines angrenzenden Kofferraums verkleinert ist.

Eine solche Konstruktion ist in der DE 298 09 008 U1 gezeigt. Der höhenbewegliche Boden des Verdeckkastens erfüllt hier nur in abgesenkter Stellung die Funktion, den Verdeckkasten nach unten zu begrenzen. In angehobener Stellung ist er funktionslos und begrenzt aufgrund seiner eigenen Ausdehnung nur den zur Verfügung stehenden Kofferraum.

Die DE 101 62 303 A1 zeigt ein Bodenteil eines Verdeckkastenbodens, der manuell anhebbar ist und in angehobener Stellung eine Hutablage bildet. Ein derartiges Anheben ist jedoch kraftaufwendig und birgt die Gefahr des Verkantens des über die gesamte Innenraumbreite erstreckten Verdeckkastenbodens. Zudem muß er zumindest in oberer Stellung an beiden Seiten sicher verriegelt werden, was manuelle Ausrichtung und Zusatzarbeit erfordert und die Gefahr einer Fehlbedienung birgt.

Aus der DE 103 39 274 A1 ist ein Cabriolet-Fahrzeug bekannt, bei dem eine Hutablage mit ihrer rückwärtigen Kante schwenkbar und derart federbeaufschlagt an einem hinteren, eine Heckscheibe umfassenden Dachteil gehalten ist, daß sie bei geschlossenem Dach in eine abgewinkelt zur Heckscheibe stehende Lage gedrückt wird. Bei Dachöffnung hingegen wird die Hutablage mit der Heckscheibe abwärts verlagert und dabei aus ihrer abgewinkelt zur Heckscheibe stehenden Lage durch Aufsetzen auf einer Karosseriekante gegen die Federkraft in eine nahezu parallel zur Heckscheibe liegende Lage verlagert. Dabei ist ein verschleißförderndes (Lackabtrag, Beschädigung einer Verkleidung) Aufsetzen und Verschieben der Hutablage auf der Karosseriekante erforderlich. Zudem besteht bei der Zusammenwirkung mit der Karosserie die Gefahr des Verkantens, das dann zurückwirken würde bis in die Dachbewegung hinein. Andererseits wird beim Schließen des Daches die Hutablage schon früh in der Bewegung in ihre abgewinkelte Stellung gedrückt und bewirkt damit eine große Kollisionsgefahr zu Karosserieteilen, die eventuell bei geschlossenem Dach als Auflager für die Hutablage dienen könnten. Es sind daher ganz spezielle Rohbaugeometrien zu verwirklichen.

Aus der nachveröffentlichten Druckschrift EP 1 609 652 A1 ist ein Verdeck für ein Cabriolet-Fahrzeug mit einem Abdeckmittel bekannt, welches in geschlossener Verdeckposition einen Ablageraum des Verdecks überdeckt und in offener Position des Verdecks eine mit einer herkömmlich bekannten Hutablage vergleichbare Position einnimmt. Das Abdeckmittel ist mittels einer Viergelenkanordnung mit einem Spannbügel des Verdecks verbunden und wird während einer Öffnungs- oder Schließbewegung des Verdecks hierdurch verlagert.

Der Erfindung liegt das Problem zugrunde, bei einem gattungsgemäßen Cabriolet-Fahrzeug hier eine Verbesserung zu erreichen.

Die Erfindung löst dieses Problem durch ein Cabriolet-Fahrzeug mit den Merkmalen des Anspruchs 1. Hinsichtlich vorteilhafter Ausgestaltungen der Erfindung wird auf die weiteren Ansprüche 2 bis 5 verwiesen.

Dadurch, dass der Bodenbereich insgesamt über eine vorzugsweise verdeckte Mehrgelenkanordnung, zum Beispiel eine Viergelenkanordnung, an der Karosserie gehalten ist, kann neben der vom Dach gesteuerten Auf- oder Abbewegung auch eine zusätzliche Längsbewegungskomponente vermittelt werden.

Durch die Erfindung ist eine bequem zu erreichende zusätzliche Funktion des verlagerbaren Bodenbereichs auch in angehobener Stellung erreicht, indem dieser dann als Hutablage dient und somit sicherstellt, daß hinter den hinteren bzw. vorderen Sitzlehnen (bei einem Zweisitzer) eine optische Abdeckung geschaffen ist, die bis zur Innenseite des hinteren Dachendes reicht. Um Steuerungsund Antriebsaufwand für den beweglichen Bodenbereich zu minimieren und einen hohen Bedienkomfort sicherzustellen, ist der Bödenbereich mit dem Dach verbunden und zumindest bei dessen Schließbewegung von diesem mit einer Aufwärtskomponente beweglich. Das Absenken kann auch über das Eigengewicht der Hutablage erfolgen. Auch in oberer Stellung kann die Hutablage über das in Schließstellung verriegelte Dach ohne manuell einzustellende Verriegelung gehalten sein. In jedem Fall entfällt sowohl ein manuelles Anheben des zumindest einen und häufig sperrigen Plattenteils als auch ein schwieriges :Zirkeln zur Erreichung der Verriegelung. Dadurch, dass der Bodenbereich über ein Koppelgestänge an den hinteren Dachbereich angehängt ist, kann über dieses Gestänge die gesamte Auf- und Abbewegung des Bodenbereichs bewirkt werden. Hiedurch ergibt sich in beide Richtungen ein definierter und ruckfreier Bewegungsablauf.

Der Bodenbereich kann hierzu wannenartig mit erhöhten Rändern ausgebildet sein, um auch in angehobener Stellung eine umfangreiche Ablagemöglichkeit zu schaffen. Zudem kann vorteilhaft der in Doppelfunktion auch als Hutablage dienende Bodenbereich auch in Anpassung an den Innenraum gestaltet, etwa mit passendfarbigem Leder bezogen sein. Dies ist besonders günstig, da die Hutablage zum Beispiel auch durch das Heckfenster bei geschlossenem Dach von außen gut sichtbar ist.

Um den benötigten Raum für das Koppelgestänge zu minimieren, kann dieses den Bodenbereich durchgreifen, etwa an längs liegenden, schmalen Spaltöffnungen im Bodenbereich. Hierzu können flexible, zum Beispiel textile Verkleidungen den Durchtrittsraum gegen die Hutablage abdichten. Dadurch ist auch ein Durchfallen von Kleinteilen verhindert.

Ein dabei vorder- und/oder rückseitig des Bodenbereichs entstehender Spalt ist vorteilhaft von einer flexiblen Bahn, die an den Bodenbereich angehängt ist, abdeckbar, was besonders vorteilhaft ist und die Nutzbarkeit des Bodenbereichs weiter verbessert.

Eine besondere Entlastung des abgelegten Daches und der Bewegungsmechanik ergibt sich, wenn der Bodenbereich in abgesenkter Stellung mittelbar oder unmittelbar auf hinteren Radhäusern aufliegt und somit von diesen abgestützt ist. Insbesondere bei Vorsehen eines Koppelgestänges ergibt sich auch beim Absenken der Hutablage in ihre Bodenbereichsstellung ein sicheres und zielgerichtetes Aufsetzen des Bodenbereichs auf der unteren Auflage, ohne daß auch hier ein manuelles Zirkeln oder Nachjustieren erforderlich wäre.

Besonders günstig begrenzt der Bodenbereich einen Zusatzraum, der in abgesenkter Stellung des Bodenbereichs Bestandteil des Verdeckkastens und in angehobener Stellung Bestandteil des Kofferraums ist.

Weitere Vorteile und Merkmale der Erfindung ergeben sich aus einem in der Zeichnung schematisch dargestellten und nachfolgend beschriebenen Ausführungsbeispiel des Gegenstandes der Erfindung.

In der Zeichnung zeigt:
- Fig. 1: eine im vorderen Teil abgebrochene, schematische Seitenansicht eines erfindungsgemäßen Cabriolet-Fahrzeugs bei geschlossenem, teilweise aufgebrochenem Dach und zur Hutablage angehobenem Bodenbereich des Verdeckkastens,
- Fig. 2: eine Einzelteilansicht des geschlossenen hinteren Daches - der Übersichtlichkeit halber ohne Bezug gezeichnet - und der Hutablage in Stellung nach Fig. 1,

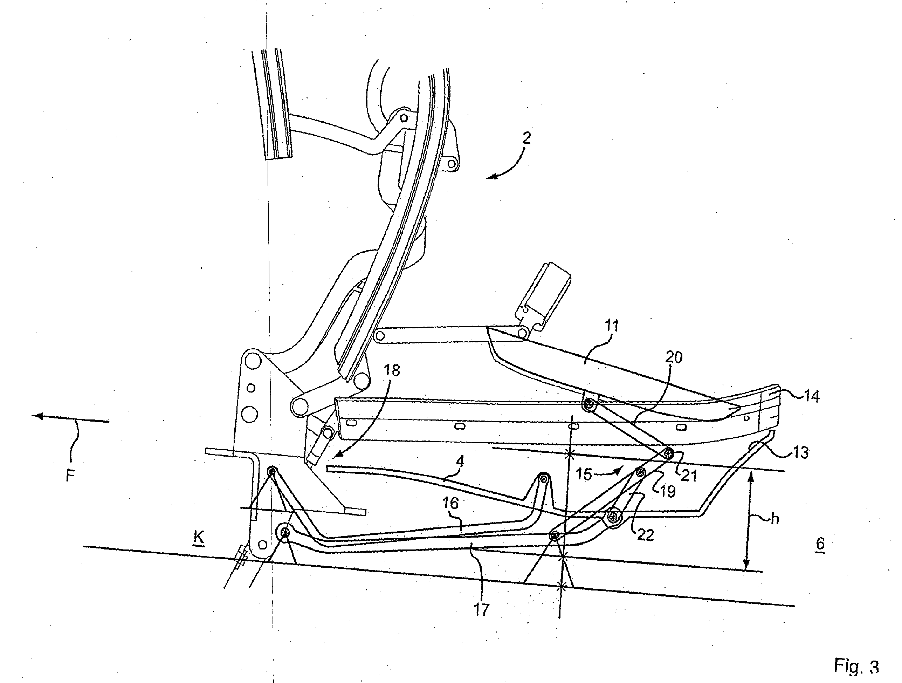

- Fig. 3: eine ähnliche Ansicht wie Fig. 2 während der Dachöffnung und des damit verbunden Absenkens der Hutablage,
- Fig. 4: eine ähnliche Ansicht wie Fig. 3 bei vollständig abgesenktem Bodenbereich und darauf gelegenem geöffnetem Dach, während der beginnenden Dachöffnung und dadurch beginnenden Ausschwenkens der Erweiterung.

Das in der Zeichnung nur unvollständig dargestellte Cabriolet-Fahrzeug 1 umfaßt ein bewegliches Dach 2, das in seinem geöffneten Zustand im heckwärtigen Karosseriebereich in einem Verdeckkasten 3 ablegbar ist. Der Verdeckkasten 3 ist größenvariabel und umfaßt hierfür zumindest einen beweglichen Bodenbereich 4. Dieser bildet im gezeichneten Ausführungsbeispiel den gesamten Boden des Verdeckkastens 3 und ist um die Höhendifferenz h auf- und abbeweglich, wobei die Bewegung keine rein vertikale Bewegung sein muß, sondern eine Komponente in Fahrzeuglängsrichtung umfassen kann. Auch muß es sich nicht - anders, als hier dargestellt - um eine Parallelverlagerung des Bodenbereichs 4 handeln.

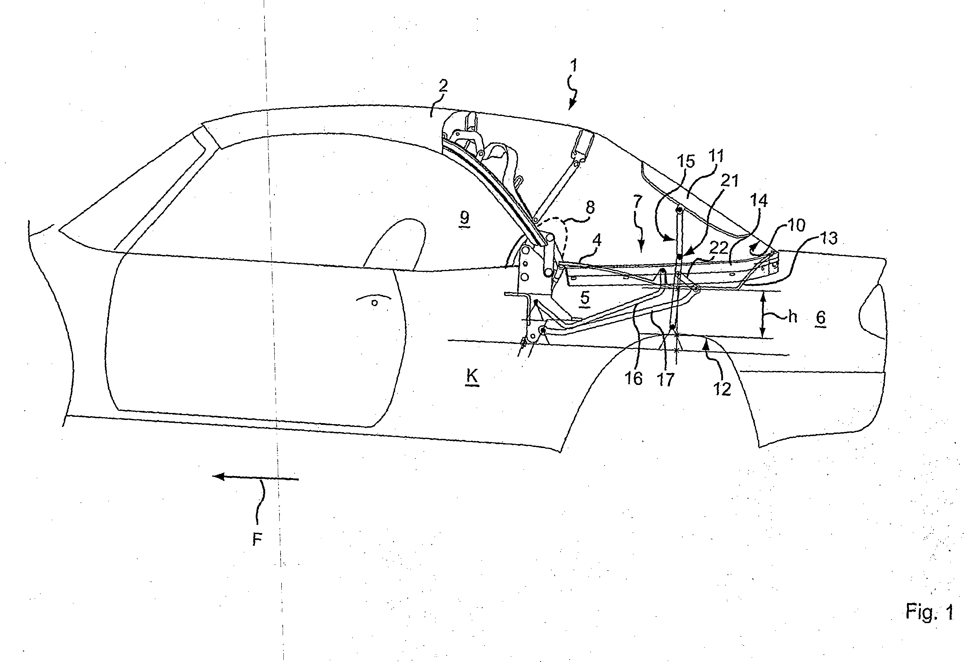

Wie aus Fig. 1 deutlich wird, bildet bei geschlossenem Dach 2 in angehobener Stellung des Bodenbereichs 4 ein von diesem dann oberseitig begrenzter Zusatzraum 5 einen Bestandteil des unterhalb und heckseitig des Verdeckkastens 3 liegenden Kofferraums 6. In abgesenkter Stellung des Bodenbereichs 4 begrenzt dieser hingegen den Zusatzraum 5 unterseitig. Dieser ist dann Bestandteil des Verdeckkastens 3, der um diesen Zusatzraum 5 vergrößert ist und das geöffnete Dach 2 aufnehmen kann.

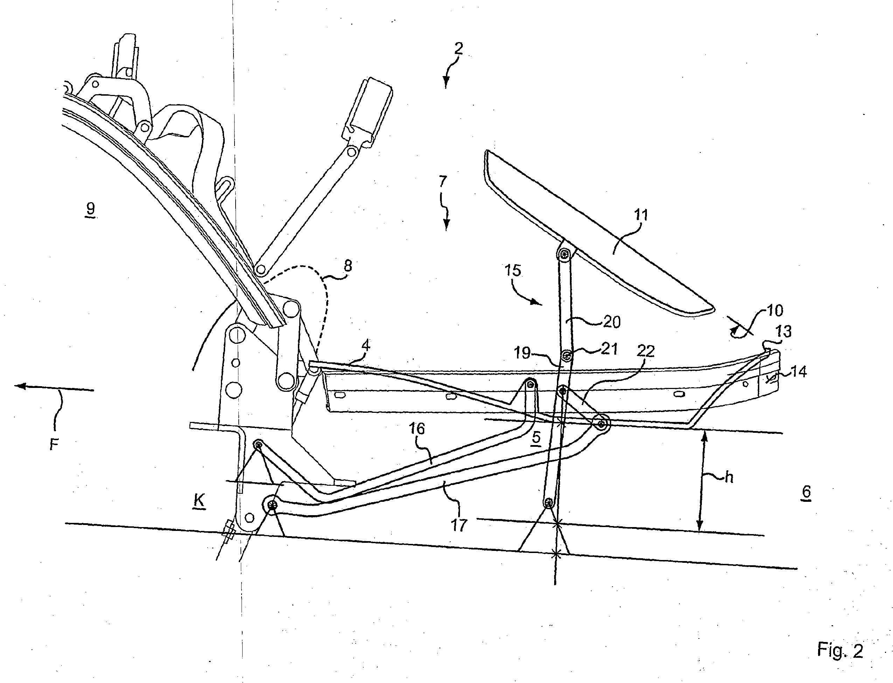

Der Bodenbereich 4 wirkt in angehobener Stellung bei geschlossenem Dach (Fig. 1, Fig. 2) nach Art einer Hutablage und deckt einen Zwischenraum 7, der in Fahrzeuglängsrichtung zwischen einem rückwärtigen Ende von Sitzen 8 des Insassenraums 9 und der Innenseite 10 des hinteren Dachbereichs liegt, ab. Bei einem Zweisitzer sind die Sitze 8 die Vordersitze, bei einem Vier- oder Mehrsitzer stellen sie hingegen Teile einer hinteren Sitzreihe dar.

Die Hutablage 4 übergreift vorteilhaft den gesamten Zwischenraum 7 und dichtet auch gegen die Innenseite 10 des hinteren Dachbereichs, also gegen die Dachunterkante unterhalb einer Heckscheibe 11, die zum Beispiel von einem starren Stoffhaltebügel 14 gebildet sein kann, derart ab, daß hier auch keine kleinen Gegenstände, zum Beispiel Kugelschreiber oder kleines Kinderspielzeug, nach unten durchfallen können. Insbesondere ist der hintere Rand 13 der Hutablage 4 hierfür hochgezogen und liegt bei geschlossenem Dach in geringem Abstand vor der oberen Kante des Stoffhaltebügels 14. Ein Herunterbiegen des Rands 13 ist dann durch den starren Stoffhaltebügel 14 zuverlässig verhindert, auch wenn die Hutablage 4 an sich aus einem elastischen Leichtbaumaterial gebildet ist.

Die Hutablage 4 kann zudem eine insgesamt wannenförmige Ausprägung aufweisen, um ihre Nutzungsmöglichkeit auch als Aufnahmeraum für leichte Gegenstände, zum Beispiel auch Jacken oder ähnliches, bei geschlossenem Dach 2 zu verbessern. Eine Ausbildung als einstückiges Formteil ist dabei möglich.

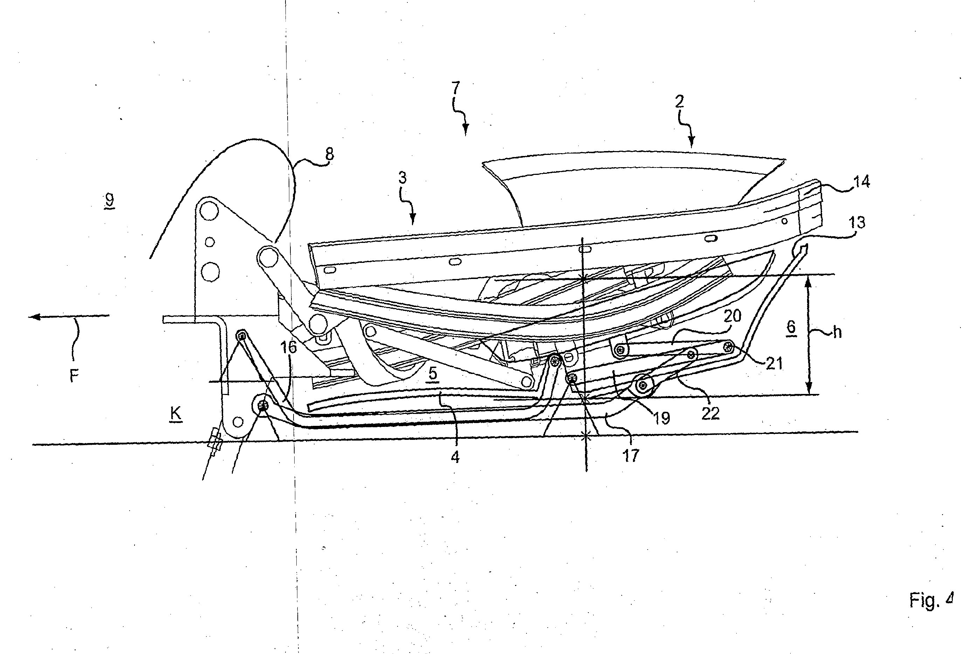

Der bewegliche Bodenbereich 4, der bei geschlossenem Dach 2 die Hutablage bildet, ist hier für seine Bewegung mit dem Dach 2 verbunden und zumindest bei dessen Schließbewegung (Übergang von Fig. 4 zu Fig. 2) von diesem beweglich. Dadurch wird weder ein eigener Antrieb noch eine eigene Steuerung für die Bewegung der Hutablage/des Bodenbereichs 4 benötigt. Ein manuelles Hantieren und Ausrichten des breiten Bodenbereichs 4 ist vermieden.

Die umgekehrte Bewegung (Übergang von Fig. 2 zu Fig. 4) könnte auch beim Absenken des Daches 2 über das Eigengewicht des Bodenbereichs 4 erfolgen. Hier ist er jedoch über ein Koppelgestänge 15 derart an das Dach 2 angebunden, daß dieses in jeder Phase der Bewegung den Stand des Bodenbereichs 4 eindeutig vorgibt. Dieses Koppelgestänge 15 hält die Hutablage 4 auch in angehobener Stellung bei geschlossenem Dach 2 und kann sie von unten dichtend gegen den Bereich 10 des Daches 2 ziehen. Eine erhebliche Gewichtsbelastung der Hutablage 4 ist aufgrund der Zwangsverbindung 15 mit dem geschlossenen und am Windschutzscheibenrahmen verriegelten Dach 2 möglich.

Der Bodenbereich 4 kann zudem an jeder Fahrzeugseite über ein Mehrgelenk, hier ein Viergelenk mit längs im Fahrzeug angeordneten Lenkern 16, 17, an die Karosserie K angebunden sein. Diese Lenker 16, 17 sind an zwei Gelenken karosseriefest und an zwei Gelenken mit dem Bodenbereich/der Hutablage 4 beweglich verbunden. Die Achsen dieser Gelenke liegen quer zum Fahrzeug. Dadurch, daß sich die Lenker 16, 17 von den karosserieseitigen Gelenken zur Hutablage 4 nach hinten erstrecken, ist deren Abwärtsbewegung mit einer Bewegungskomponente entgegen der Fahrtrichtung F nach hinten verbunden.

Um einen dabei entstehenden Spalt 18 abdecken zu können, kann hier vorder- und/oder auch rückseitig des Bodenbereichs 4 eine flexible, zum Beispiel textile, Bahn zur Spaltüberbrückung vorgesehen sein. Damit ist die Nutzbarkeit weiter verbessert, auch Kleinteile sind gegen ein Durchfallen zuverlässig gesichert.

Das Koppelgestänge 15 durchgreift an beiden Querseiten jeweils seitlich in beispielsweise Schlitzausnehmungen den Bodenbereich 4 und umfaßt einen ersten, an der Karosserie K gehaltenen Lenker 19 und eine zweiten, hier mit dem Rahmen der Heckscheibe 11 gelenkig verbunden Lenker 20. Die Lenker 19, 20 sind gegeneinander bei der Dachöffnung und - absenkung am Gelenk 21 einfaltbar. Als Anbindung an den Bodenbereich/die Hutablage 4 ist ein Zwischenlenker 22 vorgesehen, der den Lenker 19 mit dieser verbindet. Der Zwischenlenker kann mit an einem Gelenk des Lenkers 16 oder 17 angreifen, so daß kein eigenes Gelenk hierfür an der Hutablage 4 benötigt wird. Die Dachöffnungs- oder-schließbewegung steuert in eindeutiger Weise die Bewegung der Hutablage/des Bodenbereichs 4.

Eine Entlastung der Kinematik kann erreicht sein, wenn bei geöffnetem Dach (Fig. 4) der Bodenbereich 4 keine oder nur geringe Kraft in das Koppelgestänge 15 einleitet, sondern auf seitlichen Radhäusern 12 abgestützt ist, wobei hierzu auf den Radhäusern 12 Auflager oder dergleichen angebracht sein können.

Zudem muß aufgrund der Halterung des Bodenbereichs 4 am Dach 2 dieser nicht selbsttragend sein. Somit können Aussteifungen entfallen oder verringert sein, die dem Bodenbereich 4 eine erhöhte Stabilität insbesondere an seitlichen Querrändern verleihen müßten. Damit ist auch die Bauhöhe des Bodenbereichs/der Hutablage verringerbar, so daß auch in angehobener Stellung mehr Platz für den Kofferraum verbleibt. Dies stellt einen weiteren besonderen Vorteil der Erfindung dar.

## Patentansprüche

1. Cabriolet-Fahrzeug (1) mit einem in einem Verdeckkasten (3) im rückwärtigen Fahrzeugbereich ablegbaren Dach (2), wobei der Verdeckkasten (3) einen zumindest bereichsweise beweglichen Bodenbereich (4) aufweist, der in einer angehobenen Stellung bei geschlossenem Dach (2) einen Zwischenraum (7) zwischen einem rückwärtigen Ende von Sitzen (8) des Insassenraums (9) und der Innenseite (10) des hinteren Dachbereichs nach Art einer Hutablage abdeckt, wobei der bewegliche Bodenbereich (4) mit dem Dach (2) verbunden und zumindest bei dessen Schließbewegung von diesem beweglich ist,
**dadurch gekennzeichnet,**
**daß** der bewegliche Bodenbereich (4) über ein Koppelgestänge (15) an den hinteren Dachbereich angehängt ist und über eine Mehrgelenkanordnung (16;17) an der Karosserie (K) gehalten ist.

2. Cabriolet-Fahrzeug (1) nach Anspruch 1,
**dadurch gekennzeichnet;**
**daß** das Koppelgestänge (15) den Bodenbereich (4) durchgreift.

3. Cabriolet-Fahrzeug (1) nach einem der Ansprüche 1 oder 2,
**dadurch gekennzeichnet,**
**daß** vorder- und/oder rückseitig des Bodenbereichs (4) eine flexible Spaltüberbrückung anschließt.

4. Cabriolet-Fahrzeug (1) nach einem der Ansprüche 1 bis 3,
**dadurch gekennzeichnet,**
**daß** der Bodenbereich (4) in abgesenkter Stellung mittelbar oder unmittelbar auf hinteren Radhäusern aufliegt.

5. Cabriolet-Fahrzeug (1) nach einem der Ansprüche 1 bis 4,
**dadurch gekennzeichnet,**
**daß** der Bodenbereich (4) einen Zusatzraum (5) begrenzt, der in abgesenkter Stellung des Bodenbereiches (4) Bestandteil des Verdeckkastens (3) und in angehobener Stellung Bestandteil des Kofferraums (6) ist.

## Claims

1. A convertible vehicle (1) comprising: a roof (2) which can be stored in a hood storage compartment (3) at the rear of the vehicle, said hood storage compartment (3) comprising an at least partially movable base region (4) which, in a raised position and when the roof (2) is closed, covers an intermediate space (7) between a rear end of seats (8) of the occupant space (9) and the inner surface (10) of the rear roof portion in the manner of a parcel shelf, said movable base region (4) being connected to the roof (2) and being movable by the roof (2) at least during the closing movement of the latter, **characterised in that** the movable base region (4) is attached to the rear roof region by a coupling linkage (15) and is held on the vehicle body (K) by a multi-bar linkage (16;17).

2. The convertible vehicle (1) according to claim 1, **characterised in that** the coupling linkage (15) extends through the base region (4).

3. The convertible vehicle (1) according to any one of claims 1 or 2, **characterised in that** a flexible interstice cover is attached to the front side and/or rear side of the base region (4).

4. The convertible vehicle (1) according to any one of claims 1 to 3, **characterised in that** the base region (4), when in the lowered position, is supported directly or indirectly by rear wheel housings.

5. The convertible vehicle (1) according to any one of claims 1 to 4, **characterised in that** the base region (4) bounds an additional space (5) which forms part of the hood storage compartment (3) when the base region (4) is in the lowered position and which is a component of the luggage compartment (6) when the base region (4) is in the raised position.

## Revendications

1. Véhicule cabriolet (1) comportant un toit (2) escamotable dans un compartiment de rangement (3) à l'arrière du véhicule, ledit compartiment de rangement (3) comportant une région de fond (4) déplaçable au moins en partie qui, en position levée et lorsque le toit (2) est fermé, recouvre à la manière d'une plage arrière un espace intermédiaire (7) entre une extrémité arrière de sièges (8) dans l'habitacle (9) et la face intérieure (10) de la région arrière du toit, ladite région de fond déplaçable (4) étant reliée au toit (2) et étant déplaçable par le toit (2) au moins pendant le mouvement de fermeture de celui-ci, **caractérisé en ce que** la région de fond déplaçable (4) est attachée à la région arrière du toit par une tringlerie d'accouplement (15) et est tenue sur la carrosserie (K) par un ensemble à plusieurs articulations (16;17).

2. Véhicule cabriolet (1) selon la revendication 1, **caractérisé en ce que** la tringlerie d'accouplement (15) traverse la région de fond (4).

3. Véhicule cabriolet (1) selon l'une quelconque des revendications 1 ou 2, **caractérisé en ce qu'**une couverture flexible d'interstice se raccorde à l'extrémité avant et/ou arrière de la région de fond (4).

4. Véhicule cabriolet (1) selon l'une quelconque des revendications 1 à 3, **caractérisé en ce que** la région de fond (4) en position abaissée prend appui, directement ou indirectement, sur des passages de roues arrières.

5. Véhicule cabriolet (1) selon l'une quelconque des revendications 1 à 4, **caractérisé en ce que** la région de fond (4) délimite un espace additionnel (5) qui fait partie du compartiment de rangement (3) lorsque la région de fond (4) est en position abaissée et fait partie du coffre à bagages (6) lorsque la région de fond (4) est en position levée.
